Europäisches Patentamt

European Patent Office

Office européen des brevets

(19)

(11) Veröffentlichungsnummer: **0 303 169 B1**

# (12) EUROPÄISCHE PATENTSCHRIFT

(45) Veröffentlichungstag der Patentschrift: **07.10.92**

(21) Anmeldenummer: **88112614.8**

(22) Anmeldetag: **03.08.88**

(51) Int. Cl.⁵: **F16C 19/52**, F16C 35/06

(54) **Wälzlagerung.**

(30) Priorität: **14.08.87 DE 3727151**

(43) Veröffentlichungstag der Anmeldung:
**15.02.89 Patentblatt 89/07**

(45) Bekanntmachung des Hinweises auf die
Patenterteilung:
**07.10.92 Patentblatt 92/41**

(84) Benannte Vertragsstaaten:
**CH DE FR GB IT LI SE**

(56) Entgegenhaltungen:
**CH-A- 407 666**

**PATENT ABSTRACT OF JAPAN vol.5, no.183
(M-97)(866)21. November 1981;**

**Zeitschrift für wirtschaftliche Fertigung, Heft
12, 1986, "Anwendung der Formgedächtnis-
Legierungen in der Technik, Seiten 703-708".**

(73) Patentinhaber: **SKF GmbH
Ernst-Sachs-Strasse 2-8 Postfach 1440
W-8720 Schweinfurt(DE)**

(72) Erfinder: **Bokel, Arnold
Berliner Platz 7
W-8721 Schwebheim(DE)**

## Beschreibung

Die Erfindung betrifft eine Wälzlagerung nach dem Oberbegriff des Hauptanspruches.

Bei einer derartigen Spindellagerung nach der CH-PS 407 666 sind zwei Schrägwälzlager in O-Anordnung vorgesehen und im Abstand zueinander fixiert. Sowohl zwischen den Innenringen als auch zwischen den Außenringen sind Distanzringe angeordnet. Die äußeren Seitenflächen der Laufringe liegen an festen Bordflächen an bzw. sind durch Sicherungsringe abgestützt. Beim Zusammenbau muß insbesondere bei vorgespannten Lagerungen ein entsprechendes Druckwerkzeug vorgesehen werden, das beispielsweise die Innenringe bei der bekannten O-Anordnung gegeneinander zusammenpreßt bevor der Sicherungs- oder Befestigungsring fixiert, eingeschnappt oder dgl. wird. Das gleiche gilt bei Lagerungen in X-Anordnung für die Außenringe. Insbesondere bei Lagerungen mit großen Abmessungen wird die Montage oftmals am Einsatzort durchgeführt, wo keine entsprechenden Druckwerkzeuge verfügbar sind bzw. solche in jeweils passender Größe erst herangeschafft werden müssen. Der Aufwand ist dabei beträchtlich.

Aufgabe der Erfindung ist es, eine Walzlagerung der eingangs genannten Art so auszuführen, daß für den Einbau bzw. bei der Montage keine aufwendigen Werkzeuge verwendet werden müssen.

Die Aufgabe wird dadurch gelöst, daß das deformierbare Element aus einer Formgedächtnis-Legierung besteht und im eingebauten Zustand über die deren Formänderung bewirkende $A_S$-Temperatur erwärmt ist.

Formgedächtnis-Legierungen oder auch Memory-Elemente genannt, sind am freien Markt erhältlich und beispielsweise in dem Aufsatz "Anwendung der Formgedächtnis-Legierungen in der Technik", erschienen in der "Zeitschrift für wirtschaftliche Fertigung", Heft 12, 1986, Seite 703 ff. beschrieben. Sie haben die Eigenschaft, bei einer voraus bestimmbaren Temperatur ihre Abmessungen sprunghaft zu ändern. Dabei sind Legierungen mit Einwegcharakteristik erhältlich, die ihre bei Überschreiten der sogenannten $A_S$-Temperatur angenommene größere Ausdehnung bzw. Abmessung beibehalten. Eine andere Legierungsfamilie weist eine reversible, d.h. Zweiwegcharakteristik auf, wobei beim Überschreiten bzw. auch beim Unterschreiten der kritischen Temperatur sich jeweils eine definierte Ausdehnung ergibt. Erfindungsgemäß wird für die Befestigung von Lagerringen ein deformierbares Element, beispielsweise ein Ringselement aus einer solchen Formgedächtnis-Legierung verwendet. Es wird in einem dafür vorgesehenen Ringraum zwischen dem betreffenden Lagerring und einer festen Fläche des Maschinenteils, auf oder in dem die Befestigung erfolgen soll, lose eingelegt. Nach dem Einbau bzw. nach der gesamten Montage der Lagerung wird diese bzw. die gesamte Maschinenteil-Einheit über die kritische $A_S$-Temperatur erwärmt, wodurch sich das deformierbare Element ausdehnt und den Lagerring in der Ausdehnungsrichtung formschlüssig und quer dazu kraftschlüssig fixiert. Dabei kann das gewünschte Endmaß der Ausdehnung mit den Daten der Formgedächtnis-Legierung und den Abmessungen des deformierbaren Elementes vorausberechnet werden, wodurch eine definierte Einspannung des Lagerringes erfolgt. Das beschriebene deformierbare Element aus einer Formgedächtnis-Legierung ist universell für die Befestigung von Lagerringen jeder Art verwendbar und bietet sich weiterhin vorteilhafterweise für die Befestigung an schwer zugänglichen Stellen an.

Nach einem weiteren Merkmal der Erfindung ist für das deformierbare Element eine Formgedächtnis-Legierung in Einwegcharakteristik mit einer deren Formänderung bewirkenden $A_S$-Temperatur zwischen 40 und 50 ° C vorgesehen. Die Einwegcharakteristik bildet dabei ein vorteilhaftes Verhalten, weil nach dem vorgesehenen Überschreiten der kritischen Temperatur beim Einbau ein nachfolgendes Unterschreiten die Befestigung nicht mehr beeinflußt. Als günstig erweist sich dabei eine $A_S$-Temperatur in einem Bereich über der maximal zu erwartenden Raumtemperatur mit entsprechendem Sicherheitsabstand. Es sind jedoch auch höhere Temperatur-Werte festlegbar, wenn die Umstände beim Einbau dies erfordern.

Weitere erfindungsgemäße Merkmale gemäß den Ansprüchen werden nachfolgend an den in der Zeichnung dargestellten Beispielen beschrieben. Es zeigen:

Figur 1    den teilweisen Längsschnitt einer Lagerung in O-Anordnung mit axial wirkenden Distanzringen aus einer Formgedächtnis-Legierung zwischen den Innenringen und den Außenringen,

Figur 2    den teilweisen Längsschnitt einer Lagerung in X-Anordnung mit einem axial wirkenden Distanzring aus einer Formgedächtnis-Legierung zwischen dem innenliegenden Innenring und der Welle,

Figur 3    den teilweisen Längsschnitt einer Lagerung mit einem radial wirkenden Distanzring zwischen Außenring und Gehäuse und

Figur 4    den teilweisen Längsschnitt einer Lagerung mit einem radial wirkenden Distanzring und einer axial wirkenden Schraubenfeder aus einer Formgedächtnis-Legierung.

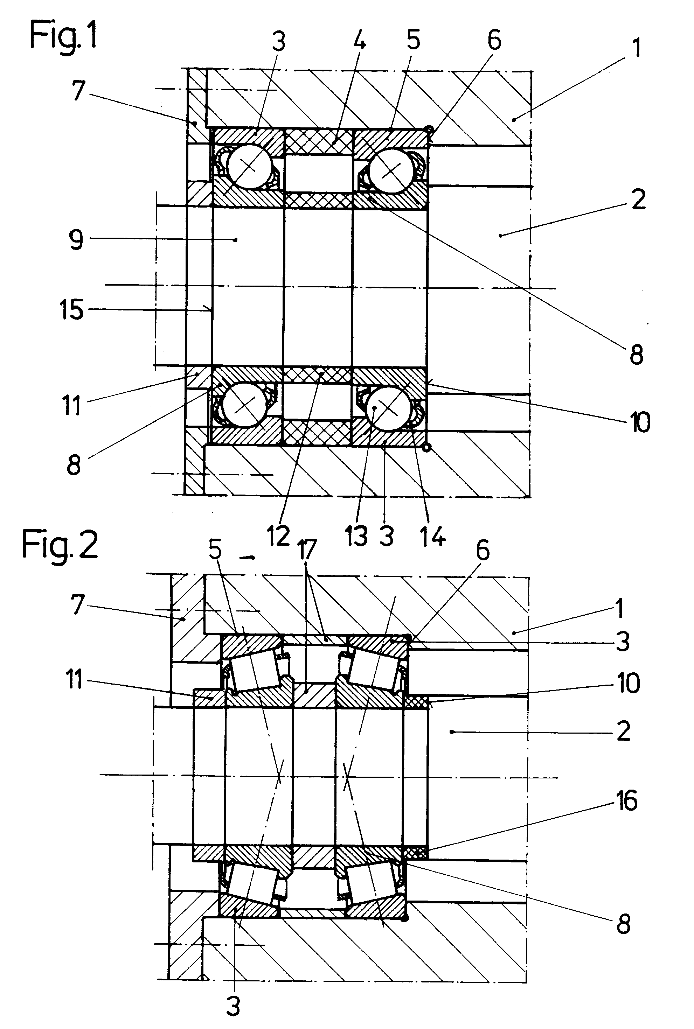

Die in Fig. 1 dargestellte Lagerung besteht aus zwei im Abstand zueinander und in O-Anordnung eingebauten Schrägkugellagern für eine in einem Gehäuse 1 drehbare Welle 2. Die Außenringe 3 sind durch einen Distanzring 4 aus einer Formgedächtnis-Legierung auf Abstand gehalten, in die Sitzbohrung 5 des Gehäuses 1 eingeführt und durch eine am Gehäuse 1 verschraubte Deckscheibe 7 an der Bordfläche 6 der Sitzbohrung 5 anliegend befestigt. Die Innenringe 8 sind auf einen Absatz 9 der Welle 2 aufgeschoben, wobei der innen liegende Innenring 8 an einer entsprechenden Bordfläche 10 der Welle 2 und der außenliegende Innenring 8 an einem in eine Nut der Welle 2 eingesetzten Sicherungsring 11 anliegt. Zwischen den Innenringen 8 ist ein weiterer Distanzring 12 aus einer Formgedächtnis-Legierung angeordnet, der wie dargestellt bei betriebsfertig montierter Lagerung die beiden Innenringe 8 auf Abstand hält und gegen die Bordfläche 10 bzw. gegen den Sicherungsring 11 unter Vorspannung anstellt. Dadurch erhalten die Innenringe 8 und die Außenringe 3 eine feste, formschlüssig fixierte axiale Position.

Bei der Montage der Lagerung wird zunächst die Welle 2 mit aufgesetztem, innenliegenden Innenring 8 und einem Kugelsatz 13 mit Käfig 14 eingeführt. Dabei ist der Distanzring 4 noch nicht über seine kritische $A_S$-Temperatur erhitzt worden und weist gegenüber der dargestellten noch eine geringe axiale Breite auf, so daß die Außenringe 3 zunächst eine Position mit geringerem gegenseitigen Abstand einnehmen können. Anschließend wird der ebenfalls noch nicht über seine kritische $A_S$-Temperatur erhitzte Distanzring 12 mit einer gegenüber der dargestellten geringeren axialen Breite und nachfolgend der außenliegende Innenring 8 mit Kugelsatz 13 und Käfig 14 auf die Welle geschoben. Durch die geringere axiale Breite der Distanzringe 4, 12 kann der außenliegende Innenring 8 völlig über die in Fig. 1 rechts dargestellte Flanke 15 der Nut hinweggeschoben werden, so daß das Einsetzen des Sicherungsringes 11, ohne die Lagerung axial vorzuspannen auf einfache Weise möglich ist. Nach diesem Arbeitsschritt wird die gesamte Lagerung mit Gehäuse 1 und Welle 2 beispielsweise in einem Wärmeofen über die $A_S$-Temperatur von z. B. 45 °C erhitzt. Dabei vergrößert sich sprunghaft die axiale Breite beider Distanzringe 4, 12, wobei sowohl die Außenringe 3 als auch die Innenringe 8 bis zur Anlage an den Bordflächen 6, 10 von Welle 2 bzw. Gehäuse 1, Sicherungsring 11 und Deckscheibe 7 unter Vorspannung anliegen. In dieser beschriebenen und in Figur 1 dargestellten Position ist die Lagerung betriebsfertig. Ein reversibler Effekt unterbleibt bei den Distanzringen 4, 12, da deren Material aus einer Formgedächtnis-Legierung mit Einwegcharakteristik besteht. Dadurch verbleibt die Lagerung auch nach dem Abkühlen im betriebsfertigen Zustand.

Beim Beispiel nach Fig. 2 ist eine Lagerung mit zwei Kegelrollenlagern in X-Anordnung vorgesehen. Die Befestigung der Außen- 3 und Innenringe 8 entspricht nahezu dem Beispiel nach Fig. 1. Es ist jedoch nur ein Distanzring 16 aus einer Formgedächtnis-Legierung vorgesehen, der zwischen einer wellenseitigen Bordfläche 10 und dem innenliegenden Innenring 8 angeordnet ist. Die Ringe 17 zwischen den Außenringen 3 und den Innenringen 8 sind aus üblichem Material mit gleichbleibender axialer Breite gefertigt. Durch diese Anordnung haben beide Innenringe 8 mit dem betreffenden Ring 17 die Möglichkeit, bei nicht erhitztem Distanzring 16 mit vorerst geringerer Breite sich in Richtung zur wellenseitigen Bordfläche 10 zu verschieben. In dieser Position kann auch hier der Sicherungsring 11 bequem eingesetzt werden. Bei Erhitzung und Ausdehnung des Distanzringes 16 werden die Innenringe 8 mit dem dazwischenliegenden Ring 17 gegen den Sicherungsring 11 angestellt, wodurch sich der betriebsfertige Zustand ergibt.

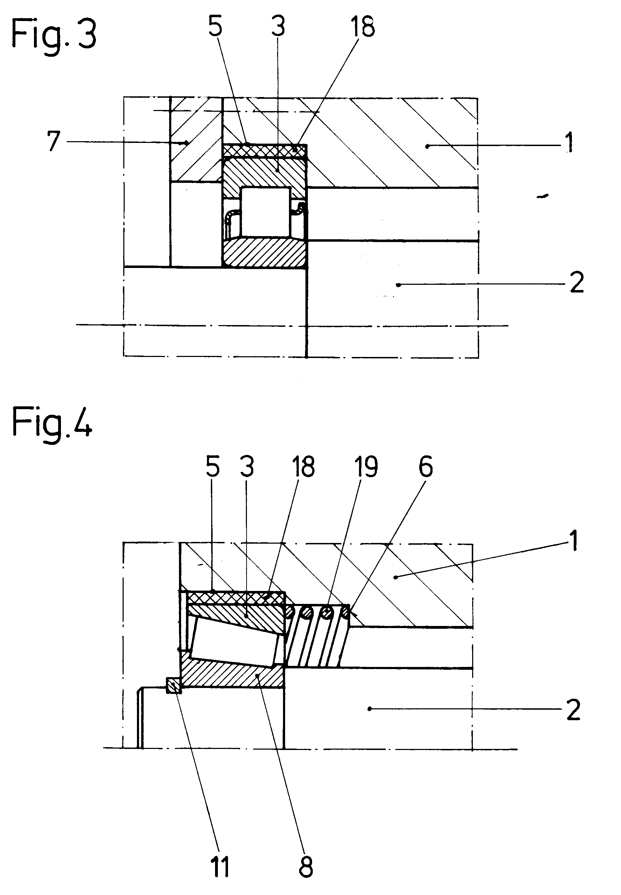

Beim Beispiel nach Fig. 3 ist ein radial wirkender Distanzring 18 aus einer Formgedächtnis-Legierung zwischen dem Außenring 3 eines Zylinderrollenlagers und der Sitzfläche 5 eines Gehäuses 1 vorgesehen. Dieser Distanzring 18 hat vor dem Erhitzen eine geringere Wandstärke als dargestellt, so daß das Lager bequem und ohne Widerstand eingeführt und axial durch eine Deckscheibe 7 fixiert werden kann. Durch Erhitzen der Lagerung über die kritische $A_S$-Temperatur hinweg vergrößert sich die Wandstärke des Distanzringes 18, wodurch sich ein fester Sitz des Außenringes 3 im Gehäuse 1 ergibt.

Bei dem in Fig. 4 dargestellten Beispiel ist ein radial wirkender Distanzring 18 zur Befestigung vorgesehen, für den sinngemäß auch die Beschreibung gemäß Fig. 3 zutrifft. Weiterhin ist eine Schraubenfeder 19 zwischen einer Bordfläche 6 des Gehäuses 1 und dem Außenring 3 des Kegelrollenlagers eingesetzt, die aus einer Formgedächtnis-Legierung besteht. Die kritischen $A_S$-Temperaturen sind so vorbestimmt, daß während des Erhitzens nach dem Einbau zunächst die Schraubenfeder 19 ihre axiale Länge sprunghaft vergrößert. Dadurch wird der Außenring 3 durch axiales Verschieben mittels der nunmehr stark vorgespannten Schraubenfeder 19 infolge seines zunächst noch losen radialen Sitzes im Distanzring 18 gegen die Kegelrollen und damit gegen den Innenring 8 angestellt. Dabei wird das Kegelrollenlager sowohl axial als auch radial spielfrei eingestellt. Beim weiteren Erhitzen wird die um beispielsweise 10 °C höhere $A_S$-Temperatur des Distanzringes 18 erreicht und der Außenring 3 in der dargestellten Lage radial formschlüssig und axial kraftschlüssig befestigt.

**Patentansprüche**

1. Wälzlagerung eines rotierenden Maschinenteils (2) in oder auf einem feststehenden Maschinenteil (1) mit mindestens einem einen äußeren (3) und einem inneren Lagerring (8) umfassenden Lager, wobei einer der Lagerringe (8) dem rotierenden (2) und der andere (3) dem feststehenden Maschinenteil (1) zugeordnet ist und mindestens einer der Ringe (3, 8) durch die Formänderung eines deformierbaren Elementes (4, 12, 16, 18, 19) formschlüssig und vorgespannt befestigt ist, dadurch gekennzeichnet, daß das deformierbare Element (4, 12, 16, 18, 19) aus einer Formgedächtnis- Legierung besteht und im eingebauten Zustand über die deren Formänderung bewirkende $A_S$-Temperatur erwärmt ist.

2. Wälzlagerung nach Anspruch 1, dadurch gekennzeichnet, daß für das deformierbare Element (4, 12, 16, 18, 19) eine Formgedächtnis-Legierung in Einwegcharakteristik mit einer deren Formänderung bewirkenden $A_S$-Temperatur zwischen 40 und 60 °C vorgesehen ist.

3. Wälzlagerung nach den Ansprüchen 1 oder 2, dadurch gekennzeichnet, daß der durch das Element (4, 12, 16, 19) vorgespannte Lagerring (3, 8) axial formschlüssig zwischen einer festen Bordfläche (6, 10) und dem deformierbaren Element (4, 12, 16, 19) fixiert ist.

4. Wälzlagerung nach Anspruch 1 oder 2, dadurch gekennzeichnet, daß der durch das Element (18) vorgespannte Lagerring (3) radial formschlüssig befestigt ist und das deformierbare Element (18) zwischen dem Lagerring (3) und einer festen Ringfläche (5) angeordnet ist.

5. Wälzlagerung nach den Ansprüchen 1 oder 2, dadurch gekennzeichnet, daß das deformierbare Element (4, 12, 19) bei einer aus zwei Wälzlagern in X- oder O-Anordnung bestehenden Lagerung mindestens zwischen einem Paar durch das Element (4, 12, 19) vorgespannter Lagerringe (3, 8) eingesetzt ist.

6. Wälzlagerung nach den Ansprüchen 1 bis 5, dadurch gekennzeichnet, daß das deformierbare Element als Feder (19) ausgeführt ist.

**Claims**

1. Rolling bearing device supporting a rotating machine component (2) in or on a stationary machine component (1) with at least one bearing comprising an outer (3) and an inner ring (8), one of the rings (8) being pertinent to the rotating machine component (2), the other (3) to the stationary one (1), and at least one of the rings (3, 8) being form locked and pretensioned due to the change in shape of a deformable element (4, 12, 16, 18, 19), characterised in that the deformable element (4, 12, 16, 18, 19) is made from a shape memory alloy and in mounted condition is heated beyond the temperature $A_S$ at which the change in shape is effected.

2. Rolling bearing device as claimed in claim 1, characterised in that a shape memory alloy of the unidirectional type with the temperature $A_S$ at which the change in shape is effected ranging between 40 and 60 °C is intended for the deformable element (4, 12, 16, 18, 19).

3. Rolling bearing device as claimed in claims 1 or 2, characterised in that the ring (3, 8) pretensioned by the element (4, 12, 16, 19) is form locked axially between a fixed flange abutment face (6, 10) and the deformable element (4, 12, 16, 19).

4. Rolling bearing device as claimed in claims 1 or 2, characterised in that the ring (3) pretensioned by the element (18) is form locked radially and that the deformable element (18) is located between the bearing ring (3) and a fixed bore surface (5).

5. Rolling bearing device as claimed in claims 1 or 2, characterised in that in a rolling bearing device consisting of two rolling bearings mounted face-to-face or back-to-back, the deformable element (4, 12, 19) is located between at least one of the pairs of rings (3, 8) pretensioned by the element (4, 12, 19).

6. Rolling bearing device as claimed in claims 1 to 5, characterised in that the deformable element is designed as spring (19).

**Revendications**

1. Palier à roulement d'un organe de machine tournant (2) dans ou sur un organe de machine fixe (1) avec au moins un roulement comprenant une bague extérieure (3) et une bague intérieure (8), l'une des bagues du roulement (8) étant adjointe à l'organe de machine tournant (2), l'autre (3) à l'organe de machine fixe (1) et au moins l'une des bagues (3, 8) étant fixée avec entraînement positif et préchargée grâce à la déformation d'un élément déformable (4, 12, 16, 18, 19), caractérisé par le fait que l'élément déformable (4, 12, 16, 18, 19) consiste d'un alliage à mémoire de forme et en état monté est chauffé au-delà de la température $A_S$ à laquelle s'effectue la déformation.

2. Palier à roulement suivant la revendication 1, caractérisé par le fait que pour l'élément déformable (4, 12, 16, 18, 19) est prévu un alliage à mémoire de forme de type unidirectionnel avec la température $A_S$ à laquelle s'effectue la déformation entre 40 et 60 °C.

3. Palier à roulement suivant les revendications 1 ou 2, caractérisé par le fait que la bague (3, 8) préchargée par l'élément (4, 12, 16, 19) est fixée avec entraînement positif axial entre une surface fixe d'appui sur l'épaulement (6, 10) et l'élément déformable (4, 12, 16, 19).

4. Palier à roulement suivant les revendications 1 ou 2, caractérisé par le fait que la bague (3) préchargée par l'élément (18) est fixée avec entraînement positif radial et que l'élément déformable (18) est disposé entre la bague (3) et une surface fixe d'alésage (5).

5. Palier à roulement suivant les revendications 1 ou 2, caractérisé par le fait que dans un palier à roulement comportant deux roulements dans la disposition en X ou en O, l'élément déformable (4, 12, 19) est disposé au moins entre l'une des paires de bagues (3, 8) préchargées par l'élément (4, 12, 19).

6. Palier a roulement suivant les revendications 1 à 5, caractérisé par le fait que l'élément déformable est réalisé en forme de ressort (19).

Fig.1

Fig.2

Fig. 3

Fig. 4